# EUROPÄISCHE PATENTSCHRIFT

(11) **EP 2 734 404 B1**
(45) Veröffentlichungstag und Bekanntmachung des Hinweises auf die Patenterteilung: **09.09.2015**
(21) Anmeldenummer: 12735263.1
(22) Anmeldetag: 05.07.2012
(51) Int. Cl.: B60N 2/02, B60N 2/06

(54) **HALTEVORRICHTUNG FÜR EINEN VERSTELLANTRIEB EINES KRAFTFAHRZEUGSITZES**
HOLDING DEVICE FOR AN ADJUSTMENT DRIVE OF A MOTOR VEHICLE SEAT
DISPOSITIF DE BLOCAGE POUR UN MÉCANISME DE DÉPLACEMENT D'UN SIÈGE DE VOITURE

(30) Priorität: 22.07.2011 DE 102011052058
(43) Veröffentlichungstag der Anmeldung: 28.05.2014
(73) Patentinhaber: Johnson Controls Metals and Mechanisms GmbH & Co. KG, 42699 Solingen (DE)
(72) Erfinder: LANDSKRON, Robert, 40789 Monheim (DE); SCHÜRMANN, Thorsten, 51519 Odenthal (DE)
(74) Vertreter: Finger, Catrin
(86) Internationale Anmeldenummer: PCT/EP2012/063150
(87) Internationale Veröffentlichungsnummer: WO 2013/013951

(56) Entgegenhaltungen:
- FR-A1- 2 928 880

## Beschreibung

Die Erfindung betrifft eine Haltevorrichtung für einen Verstellantrieb eines Kraftfahrzeugsitzes, mit - mindestens einem aus einem Kunststoffmaterial gebildeten Anschlussflansch zur Befestigung der Haltevorrichtung an dem Kraftfahrzeugsitz.

Haltevorrichtungen der eingangs genannten Art werden an Kraftfahrzeugsitzen dazu verwendet, um bspw. Antriebseinheiten - in der Regel Elektromotoren - oder mit den Antriebseinheiten verbundene Antriebswellen an dem Kraftfahrzeugsitz anzuordnen, wo diese mit einer Verstelleinrichtung des Kraftfahrzeugsitzes verbunden sind, mit der der Kraftfahrzeugsitz an die Bedürfnisse des Nutzers angepasst werden kann. Typische Verstellantriebe sind bspw. Sitzlehnenversteller, Sitzneigungsversteller oder eine Sitzlängsverstellvorrichtung, wobei mittels der letztgenannten der Fahrzeugsitz gegenüber einem Fahrzeugboden in Längsachsenrichtung des Fahrzeugs positioniert werden kann.

Die gattungsgemäßen Haltevorrichtungen sind in der Regel derart ausgeführt, dass sie entsprechend der konstruktiven Vorgaben an den Bauteilen des Kraftfahrzeugsitzes angeordnet werden können. Im Falle der Verwendung der Haltevorrichtungen zur Lagerung einer Antriebseinheit einer Sitzlängsverstellung ist diese bspw. mit einer Oberschiene einer Fahrzeugsitzschiene verbunden und ermöglicht so eine Lagesicherung der Antriebseinheit und/oder der Antriebswelle, so dass diese zuverlässig mit der Verstelleinrichtung verbunden sind.

Um eine zuverlässige Lagesicherung der Haltevorrichtung zu gewährleisten, weisen diese in der Regel einen Anschlussflansch auf, welcher zur Befestigung am Kraftfahrzeugsitz üblicherweise mit Bohrungen versehen ist, die der Aufnahme von Befestigungsschrauben oder Nieten dienen, mittels derer eine Verschraubung der Haltevorrichtung möglicht ist. Eine entsprechende Befestigung der Haltevorrichtung weist jedoch den Nachteil auf, dass diese im Rahmen des Montageprozesses zum einen aufgrund der teilweise schlechten Zugänglichkeit aufwendig ist und überdies die Schrauben eine Gewichtserhöhung zur Folge haben. In der FR 2,928,880 A1 ist eine weitere Ausführung für eine Haltevorrichtung mit einem Anschlussflansch nach dem Oberbegriff des Anspruchs 1 beschrieben.

Der Erfindung liegt die Aufgabe zugrunde, eine Haltevorrichtung der eingangs genannten Art bereitzustellen, welche sich einfach und zuverlässig an einem Kraftfahrzeugsitz anordnen lässt.

Die Erfindung löst die Aufgabe durch eine Haltevorrichtung mit den Merkmalen des Anspruchs 1. Vorteilhafte Weiterbildungen der Erfindung sind in den abhängigen Ansprüchen angegeben.

Kennzeichnend für die erfindungsgemäße Haltevorrichtung ist, dass an dem Anschlussflansch ein Sperrelement in einer Ruhelage lösbar angeformt ist,
wobei das Sperrelement durch eine Öffnung in dem Anschlussflansch hindurch manuell aus der Ruhelage in eine Sperrstellung verlagerbar ist, in der das Sperrelement eine elastische Verlagerung der Haltelasche in die Montagelage blockiert.

Erfindungsgemäß ist der Anschlussflansch, welcher in der Einbaulage in der Regel flächig an dem Bauteil anliegt, an dem die Haltevorrichtung zu befestigen ist, aus einem Kunststoffmaterial gebildet, der es erlaubt, an dem Anschlagflansch auch einen Befestigungsclip anzuformen, welcher an eine Befestigungsöffnung an dem zu verbindenden Bauteil angepasst ist. Der Befestigungsclip weist dabei in bekannter Weise mindestens eine elastisch verlagerbare Haltelasche auf. Diese weist in der Ruhelage, d. h. wenn die Haltevorrichtung nicht montiert ist, sowie üblicherweise auch in der Verriegelungsstellung, die der Befestigungsclip einnimmt, wenn die Haltevorrichtung montiert ist und der Befestigungsclip vollständig in eine Öffnung an dem Kraftfahrzeugsitzbauteil eingeschoben ist, keine elastische Verlagerung auf. In der Montagelage, d. h. während der Befestigungsclip innerhalb der Öffnung am Kraftfahrzeugsitzbauteil verschoben wird, ist die Haltelasche elastisch in eine Position verschoben, die diese beim Einstecken des Befestigungsclips in die zugeordnete Öffnung aufweist. In der Einbaulage befindet sich der Befestigungsclip in der Verriegelungsstellung und liegt entweder in entspannter oder gegenüber der Montagelage geringfügiger elastisch verformt in der Öffnung an.

Neben dem Befestigungsclip ist auch das Sperrelement vor der Erstmontage der Haltevorrichtung auf der dem Befestigungsclip gegenüberliegenden Seite an den Anschlussflansch angeformt. Die Verbindung ist dabei erfindungsgemäß derart ausgebildet, dass sie durch eine manuelle Betätigung des Sperrelements aufgelöst werden kann, so dass dieser dann in einfacher Weise durch die Öffnung im Anschlussflansch in eine Sperrstellung verlagert werden kann. In der Sperrstellung ist eine elastische Verlagerung des Befestigungsclips, welche für ein Herausziehen des Befestigungsclips erforderlich wäre, blockiert, so dass die Haltevorrichtung dann zuverlässig in ihrer Einbaulage gesichert ist.

Die einstückige Ausformung des Sperrelements im Rahmen des Herstellungsprozesses der Haltevorrichtung gewährleistet, dass das Sperrelement bis zur Erstmontage der Haltevorrichtung an dieser verbleibt und somit nicht verloren gehen kann. Erst nach der Positionierung der Haltevorrichtung an dem Kraftfahrzeugsitzbauteil, die mit der Anordnung des Befestigungsclips in der zugeordneten Öffnung an dem Kraftfahrzeugsitzbauteil einhergeht, wird das Sperrelement unter Auflösung der stoffschlüssigen Verbindung durch die Öffnung in dem Anschlussflansch hindurch manuell aus der Ruhelage in eine Sperrstellung verlagert, in der das Sperrelement eine elastische Verlagerung der Haltelasche in die Montagelage blockiert. Die manuelle Verlagerung erfolgt dabei bspw. durch Hineindrücken - mit oder ohne Handwerkzeug - des Sperrelements in die Öffnung an dem Anschlussflansch.

Das Sperrelement sichert somit in der Sperrstellung die durch den Befestigungsclip hergestellte Lage der Haltevorrichtung an dem Kraftfahrzeugsitz. Eine Demontage der Haltevorrichtung durch einfaches Verlagern der Haltelasche ist nicht möglich. Hierzu wäre zunächst das Sperrelement zu entfernen, weshalb die erfindungsgemäße Ausgestaltung somit eine besonders zuverlässige Anordnung der Haltevorrichtung an dem Kraftfahrzeugsitz ermöglicht. Gleichzeitig erlaubt die durch eine manuelle Betätigung lösbare Anordnung des Sperrelements eine einfache Montage der Haltevorrichtung, wobei unter einer manuellen Betätigung sowohl ein Eindrücken des Sperrelements mittels eines Fingers, bspw. Daumens oder eines Handbetätigungswerkzeuges verstanden wird.

Die Ausgestaltung des Befestigungsclips, insbesondere dessen mindestens eine Haltelasche, ist grundsätzlich frei wählbar. Nach einer besonders vorteilhaften Ausgestaltung der Erfindung weist die Haltelasche jedoch im Bereich ihres dem Anschlussflansch gegenüberliegenden freien Endes eine außenseitig angeordnete, von der Längsachse des Befestigungsclips vorstehende Haltefläche auf. Die Haltefläche ist dabei vorzugsweise derart ausgebildet, dass sie in der Verriegelungsstellung des Befestigungsclips an einer Fläche anliegt, die vorzugsweise senkrecht zur Einschubrichtung des Befestigungsclips an dem Kraftfahrzeugsitzbauteils verläuft und so den Befestigungsclip in der Verriegelungsstellung in dessen axialer Richtung formschlüssig mit dem Kraftfahrzeugsitzbauteil verbindet. Die Haltefläche hintergreift in der Verriegelungsstellung bspw. den umlaufenden Randbereich einer Öffnung, die in der Verriegelungsstellung durch den Befestigungsclip durchgriffen wird.

Nach einer besonders vorteilhaften Ausgestaltung der Erfindung ist ferner vorgesehen, dass die Haltelasche eine sich von der Haltefläche zum freien Ende verjüngende Form aufweist. Eine entsprechende Ausgestaltung, bspw. eine pilzförmige Struktur des Kopfes ermöglicht eine einfachere und somit kostengünstigere Montage der Haltevorrichtung an dem Kraftfahrzeugsitz.

Nach einer weiteren Ausgestaltung der Erfindung weist der - wie eingangs dargelegt - frei gestaltbare Befestigungsclip mindestens zwei, vorzugsweise mindestens drei, besonders bevorzugt vier um etwa 90° versetzt angeordnete Haltelaschen auf, die gemeinsam einen kreisförmigen Innen- und/oder Außenquerschnitt aufweisen. Gemäß dieser Ausgestaltung der Erfindung weist der Befestigungsclip vorzugsweise vier elastisch aus der Verriegelungsstellung in die Montagestellung verlagerbare Haltelaschen auf. Die Verwendung von insbesondere vier Haltelaschen gewährleistet dabei eine besonders zuverlässige Lagesicherung des Befestigungsclips in der vorgesehenen Aufnahmeöffnung an dem Kraftfahrzeugsitzbauteil.

Die vorzugsweise vorgesehene kreisförmige Ausgestaltung des Außenquerschnitts ermöglicht es darüber hinaus, an dem zur Montage vorgesehenen Kraftfahrzeugbauteil in einfacher Weise durch eine entsprechende Bohrung eine dem Befestigungsclip entsprechende Öffnung herzustellen. Der vorzugsweise kreisförmige Innenquerschnitt ermöglicht darüber hinaus die einfache Ausgestaltung eines geeigneten Sperrelements, welches besonders vorteilhafterweise mit einem entsprechenden Querschnitt versehen ist und somit in der Verriegelungsstellung die Haltelaschen zuverlässig arretiert. Im Falle der Verwendung eines kreisförmigen Innenquerschnitts kann das Sperrelement mit einem entsprechend kreisförmigen Querschnitt versehen sein, so dass auch die an dem Anschlussflansch vorzusehende Öffnung zum Durchschieben des Sperrelements in einfacher Weise kreisförmig ausgebildet sein kann.

Besonders bevorzugt ist dabei nach einer weiteren Ausgestaltung der Erfindung vorgesehen, dass die Haltelaschen koaxial zur sich durch den Anschlussflansch erstreckenden Öffnung verlaufend an diese angrenzend angeordnet sind. Hierdurch kann das sich durch die Öffnung erstreckende Sperrelement in der Sperrstellung unmittelbar an den Innenseiten der Haltelaschen anliegend angeordnet werden, was eine besonders zuverlässige Sperrung der Haltelaschen bewirkt.

Die Ausgestaltung des Sperrelements ist, wie bereits zuvor dargelegt, grundsätzlich frei wählbar, sofern gewährleistet wird, dass dieses manuell lösbar mit der Haltevorrichtung anformbar und durch die Öffnung in die Sperrlage verschiebbar ist, in der der Befestigungsclip blockiert ist. Nach einer besonders vorteilhaften Ausgestaltung der Erfindung ist vorgesehen, dass das Sperrelement durch einen Sperrstift mit einem Stiftkörper und einem Stiftkopf gebildet ist, wobei der Stiftkörper in der Ruhelage mit seinem dem Stiftkopf gegenüberliegenden freien Ende über einen manuell zerstörbaren, koaxial zur Öffnung verlaufenden Kunststoffsteg mit dem Anschlussflansch verbunden ist, wobei der Querschnitt des Stiftkörpers derart ausgebildet ist, dass dieser durch die Öffnung hindurch verschiebbar ist.

Gemäß dieser Ausgestaltung ist der Sperrstift koaxial zur Öffnung im Anschlussflansch angeordnet und lässt sich nach einer Trennung des Kunststoffstegs durch eine rein axiale Verschiebung in die Sperrstellung verlagern. Der Sperrstift weist einen Stiftkörper auf, der an seinem dem Stiftkopf gegenüberliegenden Ende über einen vorzugsweise umlaufenden Kunststoffsteg mit dem Anschlussflansch verbunden ist. Der Kunststoffsteg ist dabei in seiner Dimension derart ausgeführt, dass dieser durch einen manuellen Kraftaufwand aufgebrochen werden kann, so dass dann der Sperrstift in seine Sperrstellung verlagert werden kann. Der zur Verbindung zwischen dem Sperrstift und dem Anschlussflansch vorgesehene Kunststoffsteg ermöglicht es somit, den Sperrstift bereits im Rahmen des Kunststoffformgebungsprozesses der Haltevorrichtung mit dieser auszuführen. Die Anordnung derart, dass der Kunststoffsteg dabei koaxial zur Öffnung verläuft, erlaubt es gleichzeitig mit einer auf die Öffnung gerichteten, eine Trennung bewirkenden Verlagerung, den Sperrstift aus seiner Ruhelage in die Sperrstellung zu verlagern, so dass es keiner ergänzenden Betätigungsschritte bedarf. Insgesamt ermöglicht somit diese Ausgestaltung der Erfindung eine besonders einfache und zuverlässige Montage der Haltevorrichtung, wobei der Sperrstift in einfacher Weise aus seiner Ruhelage in eine den Befestigungsclip blockierende Sperrstellung verlagerbar ist. Der Stiftkopf erlaubt dabei bei einer entsprechenden Ausgestaltung auch eine einfache manuelle Kraftaufbringung, so dass auf Betätigungswerkzeuge zur Erhöhung der Betätigungskraft verzichtet werden kann.

Nach einer weiteren Ausgestaltung der Erfindung ist ferner vorgesehen, dass der Stiftkörper im Bereich des Stiftkopfes eine Querschnittserweiterung aufweist. Die Querschnittserweiterung ist dabei besonders vorteilhafterweise an die Öffnung in dem Anschlussflansch angepasst und weist einen geringfügig größeren Querschnitt auf. Hierdurch ist es möglich, den Sperrstift in einfacher Weise in seiner Sperrstellung in seiner Lage zu fixieren, in der der Sperrstift in der Öffnung über die Querschnittserweiterung klemmend gehalten ist.

Nach einer vorteilhaften Weiterbildung der Erfindung ist ferner vorgesehen, dass der Anschlussflansch an seiner den Kraftfahrzeugsitzbauteilen zugewandten Anschlagfläche Positionierstifte aufweist. Diese Positionierstifte erleichtern die Lagesicherung sowie die Ausrichtung der Haltevorrichtung an dem Kraftfahrzeugsitzbauteil und sichern im Fall eines Crashs zusätzlich die Position der Haltevorrichtung. Neben dem Querschnitt der Befestigungsclips und der Sperrelemente trägt zusätzlich der Querschnitt der Positionierstifte.

Wie bereits eingangs dargelegt, kann die Haltevorrichtung grundsätzlich beliebig ausgebildet sein. Nach einer besonders vorteilhaften Ausgestaltung der Erfindung ist diese jedoch durch einen Aufnahmeabschnitt zur Lagerung einer Antriebseinheit und/oder mindestens einen Kanal zur Lagerung einer Antriebswelle gekennzeichnet. Bei einer entsprechenden Ausgestaltung, insbesondere bei einer kombinierten Anordnungsmöglichkeit sowohl der Antriebswellen als auch der Antriebseinheit kann auf ergänzende Bauteile zu deren Lagesicherung verzichtet werden. Besonders vorteilhafterweise ist dabei der Aufnahmeabschnitt, der Anschlussflansch, der Befestigungsclip und/oder der Sperrstift aus einem glasfaser- und/oder faserverstärkten, insbesondere kohlefaserverstärkten Kunststoff gebildet, welcher es ermöglicht, die Haltevorrichtung, bzw. deren Bauteile mit einem geringen Gewicht und gleichzeitig hoher Festigkeit kostengünstig auszuformen.

Besonders vorteilhafterweise ist dabei vorgesehen, dass die Haltevorrichtung zwei sich an gegenüberliegenden Seiten eines Aufnahmeabschnitts anschließende Kanäle zur Aufnahme jeweils einer Antriebswelle aufweist, wobei die Kanäle an ihrem dem Aufnahmeabschnitt gegenüberliegenden Enden jeweils einen Anschlussflansch aufweisen.

Ein Ausführungsbeispiel der Erfindung wird nachstehend mit Bezug auf die Zeichnungen näher erläutert. In den Zeichnungen zeigen:
- Fig. 1: eine perspektivische Ansicht einer Haltevorrichtung;

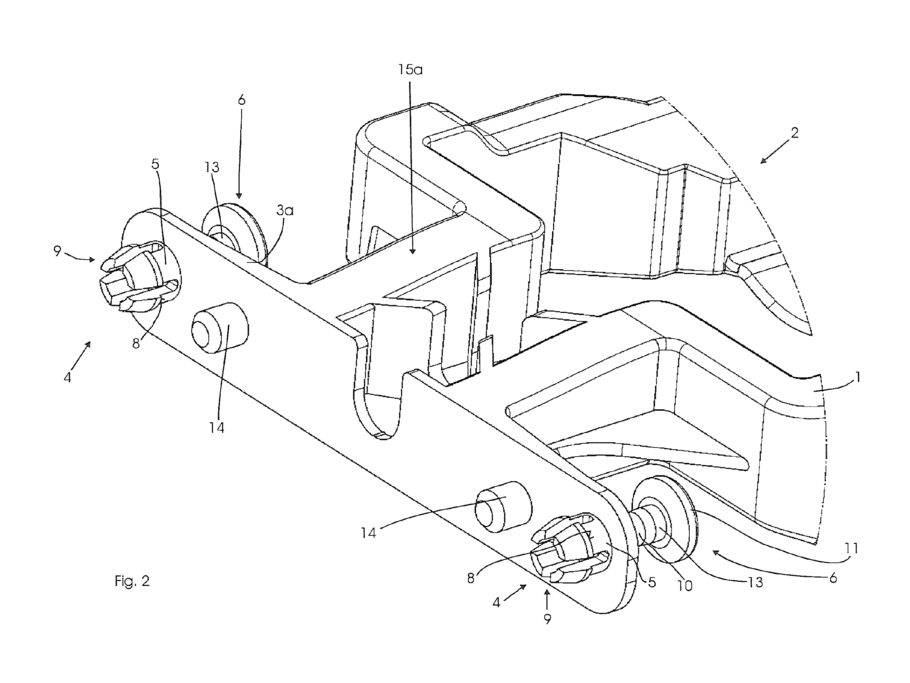

- Fig. 2: eine Vergrößerung eines Endes der Haltevorrichtung von Fig. 1 in einer perspektivischen Ansicht;

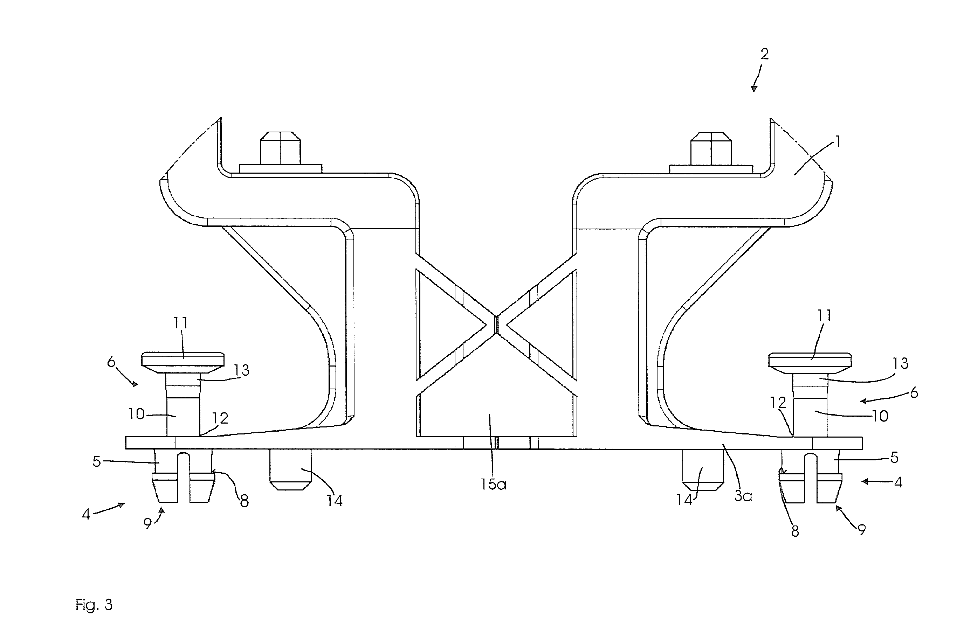

- Fig. 3: eine Draufsicht auf den in Fig. 2 dargestellten vergrößerten Abschnitt;
- Fig. 4: eine Schnittansicht des in Fig. 3 dargestellten Abschnitts der Haltevorrichtung von Fig. 1 in seiner Montagelage an einer Kraftfahrzeugsitzschiene und
- Fig. 5: eine perspektivische Ansicht der Haltevorrichtung von Fig. 1 in der Montagelage an zwei gegenüberliegend angeordneten Kraftfahrzeugsitzschienen.

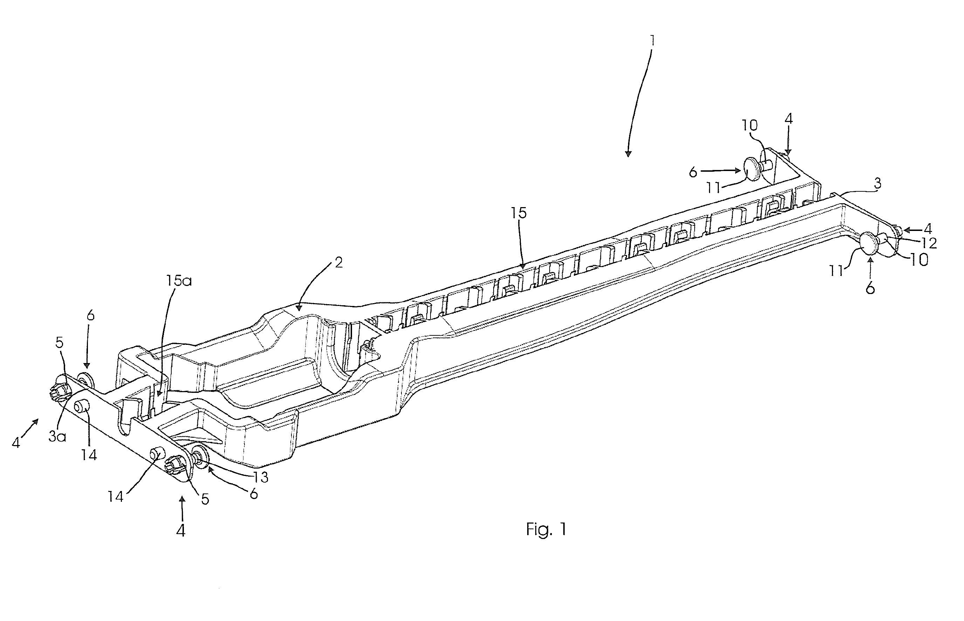

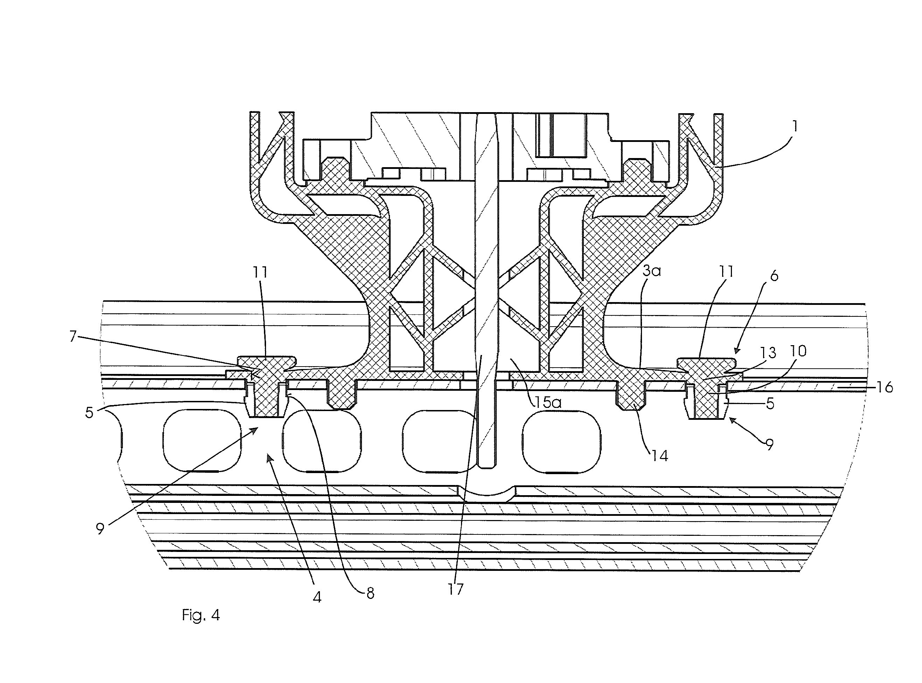

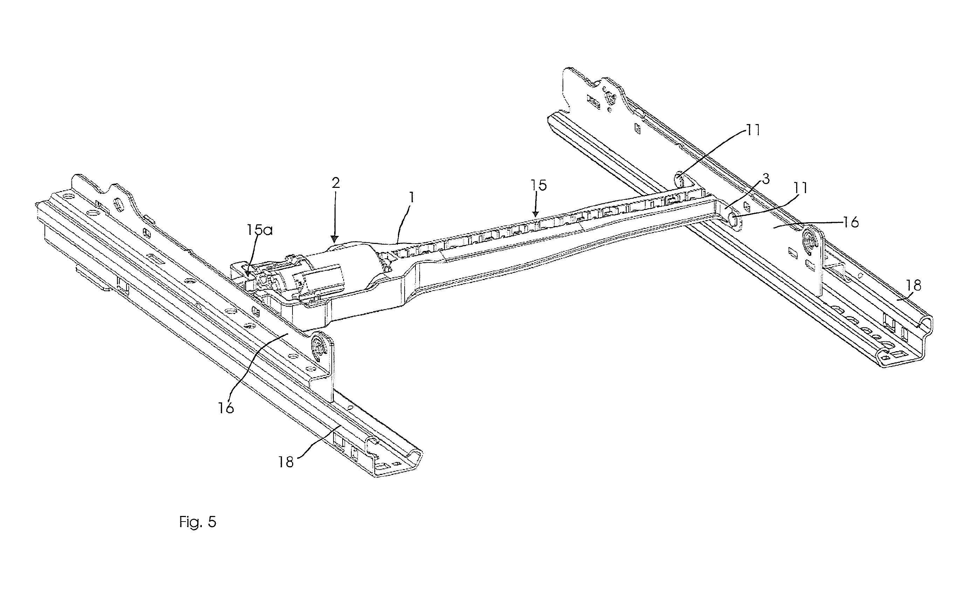

In Fig. 1 ist in einer perspektivischen Darstellung eine Haltevorrichtung 1 dargestellt, welche aus einem glasfaserverstärkten Kunststoff gebildet ist. Die Haltevorrichtung 1 weist einen Aufnahmeabschnitt 2 zur Anordnung eines Elektromotors sowie zwei sich an den Aufnahmeabschnitt 2 anschließende Kanäle 15, 15a zur lagesicheren Aufnahme einer ersten Antriebswelle 17 sowie einer zweiten, hier nicht dargestellten Antriebswelle auf. Endseitig schließt sich an die Kanäle 15, 15a jeweils ein senkrecht zur Kanallängsachse verlaufender Anschlussflansch 3, 3a an, wobei die Anschlussflansche 3, 3a in ihrer in den Fig. 4 und 5 dargestellten Einbaulage der Haltevorrichtung 1 an einem Sitzuntergestell mit ihren Außenseiten an den Innenseiten zweier Sitzoberschienen 16 angeordnet sind, welche gegenüber am Fahrzeugboden anordbaren Sitzunterschienen 18 verstellbar sind.

Zur Lagesicherung der Haltevorrichtung 1 an den Sitzoberschienen 16 weist die Haltevorrichtung 1 an den Außenseiten der Anschlussflansche 3, 3a jeweils zwei im Abstand voneinander angeordnete Befestigungsclips 4 sowie zwei im Abstand voneinander zwischen den Befestigungsclips 4 angeordnete Positionierstifte 14 auf. Die Befestigungsclips 4 weisen jeweils vier um 90° zueinander versetzte, im Querschnitt bogenförmige Haltelaschen 5 auf, so dass diese gemeinsam einen kreisförmigen Außenquerschnitt und Innenquerschnitt des Befestigungsclips 4 bilden. Die Befestigungsclips 4 und die Positionierstifte 14 sind in der Einbaulage der Haltevorrichtung 1 in Öffnungen an der Sitzoberschiene 16 eingesteckt. Der Durchmesser der Öffnungen für die Befestigungsclips 4 an der Sitzschiene 16 ist dabei derart bemessen, dass das freie, pilzförmige Ende einen größeren Durchmesser aufweist. Zur Anordnung der Haltevorrichtung 1 an den Sitzoberschienen 16 ist somit eine elastische Verlagerung der Haltelaschen 5 aus ihrer unbelasteten Ruhelage in eine Montagelage erforderlich, in der die Haltelaschen 5 in Richtung auf die Längsachse des Befestigungsclips 4 verstellt sind.

Aufgrund der pilzförmigen Ausgestaltung des freien Endes 9 der Befestigungsclips 4 weisen die Haltelaschen 5 im Bereich jeweils des freien Endes 9 eine ringförmig umlaufende Haltefläche 8 auf, deren Außendurchmesser größer ist als der Innendurchmesser der Öffnung der Sitzschiene 16. Nach dem vollständigen Einstecken der Befestigungsclips 4 sind die Haltelaschen 5 in einer der Ruhelage entsprechenden Verriegelungsstellung angeordnet, in der die mit Halteflächen 8 versehenen freien Enden des Befestigungsclips 4 an einer dem Anschlussflansch gegenüberliegenden Seite der Sitzoberschiene 16 anliegen oder sich in unmittelbarer Nähe befinden. Ein Herausziehen des Befestigungsclips 4 aus der Öffnung der Sitzschiene 16 ist somit nur dann möglich, wenn die Haltelaschen 5 in Richtung auf die Befestigungsclipmittelachse verlagert werden.

Um eine solche Verlagerung zu verhindern, ist auf der dem Befestigungsclip 4 gegenüberliegenden Seite der Anschlussflansche 3, 3a jeweils ein Sperrstift 6 angeordnet. In der unmontierten Lage ist der Sperrstift 6 über einen dünnen Kunststoffsteg 12 mit dem Anschlussflansch 3, 3a verbunden, wobei der Kunststoffsteg 12 koaxial zu einer Öffnung 7 in dem Anschlussflansch 3, 3a verläuft, deren Innendurchmesser geringfügig größer ist als der Außendurchmesser des Stiftkörpers 10 des Sperrstifts 6.

In der in den Fig. 4 und 5 dargestellten Montagelage ist die Verbindung durch den Kunststoffsteg 12 durch manuellen Druck auf einen Stiftkopf 11 aufgebrochen und der Sperrstift 6 durch die Öffnung 7 in die in Fig. 4 und 5 dargestellte Einbaulage der Haltevorrichtung 1 verschoben, wobei der Stiftkörper 10 mit seinen Außenflächen an den Innenflächen der Haltelaschen 5 anliegt und diese somit gegen einen radiale Verlagerung in Richtung der Montagelage blockiert, in der der Befestigungsclip 4 aus der Öffnung an der Halteschiene 16 entfernbar wäre. Eine Querschnittserweiterung 13 des Stiftkörpers 10 im Bereich des Stiftkopfes 11 gewährleistet dabei eine kraftschlüssige Verbindung des Sperrstifts 6 in dessen Sperrstellung und sichert somit besonders zuverlässig die Haltevorrichtung 1 in ihrer Einbaulage an der Sitzoberschiene 16.

## Patentansprüche

1. Haltevorrichtung für einen Verstellantrieb eines Kraftfahrzeugsitzes, mit mindestens einem aus einem Kunststoffmaterial gebildeten Anschlussflansch zur Befestigung der Haltevorrichtung an dem Kraftfahrzeugsitz, wobei an dem Anschlussflansch (3, 3a) ein Befestigungsclip (4) mit mindestens einer elastisch zwischen einer Verriegelungsstellung und einer Montagelage verstellbaren Haltelasche (5) angeformt ist, **dadurch gekennzeichnet, dass** an dem Anschlussflansch (3, 3a) ein Sperrelement (6) in einer Ruhelage lösbar angeformt ist,
wobei das Sperrelement (6) durch eine Öffnung (7) in dem Anschlussflansch (3, 3a) hindurch manuell aus der Ruhelage in eine Sperrstellung verlagerbar ist, in der das Sperrelement (6) eine elastische Verlagerung der Haltelasche (5) in die Montagelage blockiert.

2. Haltevorrichtung nach Anspruch 1, **dadurch gekennzeichnet, dass** die Haltelasche (5) im Bereich ihres dem Anschlussflansch (3, 3a) gegenüberliegenden freien Endes (9) eine außenseitig verlaufende Haltefläche (8) aufweist.

3. Haltevorrichtung nach Anspruch 2, **dadurch gekennzeichnet, dass** die Haltelasche (5) eine sich von der Haltefläche (8) zum freien Ende (9) verjüngende Form aufweist.

4. Haltevorrichtung nach einem der vorherigen Ansprüche, **dadurch gekennzeichnet, dass** der Befestigungsclip (4) mindestens zwei, vorzugsweise mindestens drei, besonders bevorzugt vier um etwa 90° versetzt angeordnete Haltelaschen (5) aufweist, die gemeinsam einen kreisförmigen Innen- und/oder Außenquerschnitt aufweisen.

5. Haltevorrichtung nach einem der vorherigen Ansprüche, **dadurch gekennzeichnet, dass** die Haltelaschen (5) koaxial zur Öffnung (7) verlaufend an diese angrenzend angeordnet sind.

6. Haltevorrichtung nach einem der vorherigen Ansprüche, **dadurch gekennzeichnet, dass** das Sperrelement durch einen Sperrstift (6) mit einem Stiftkörper (10) und einem Stiftkopf (11) gebildet ist, wobei der Stiftkörper (10) in der Ruhelage mit seinem dem Stiftkopf (11) gegenüberliegenden freien Ende über einen manuell zerstörbaren, koaxial zur Öffnung verlaufenden Kunststoffsteg (12) mit dem Anschlussflansch (3, 3a) verbunden ist, wobei der Querschnitt des Stiftkörpers (10) derart ausgebildet ist, dass diese durch die Öffnung (7) hindurch verschiebbar ist.

7. Haltevorrichtung nach Anspruch 6, **dadurch gekennzeichnet, dass** der Stiftkörper (10) im Bereich des Stiftkopfes (11) eine Querschnittserweiterung (13) aufweist.

8. Haltevorrichtung nach einem der vorherigen Ansprüche, **dadurch gekennzeichnet, dass** der Anschlussflansch (3, 3a) benachbart zu dem Befestigungsclip (6) angeordnete Positionierstifte (14) aufweist.

9. Haltevorrichtung nach einem der vorherigen Ansprüche, **gekennzeichnet durch** einen Aufnahmeabschnitt (2) zur Lagerung einer Antriebseinheit und/oder mindestens einen Kanal (15, 15a) zur Lagerung einer Antriebswelle (17).

10. Haltevorrichtung nach einem der vorherigen Ansprüche, **dadurch gekennzeichnet, dass** der Aufnahmeabschnitt (2), der Anschlussflansch (3, 3a), der Befestigungsclip (4) und/oder der Sperrstift (6) aus einem glasfaser- und/oder faserverstärkten, insbesondere kohlefaserverstärkten Kunststoff gebildet sind.

11. Haltevorrichtung nach einem der vorhergehenden Ansprüche, **gekennzeichnet durch** zwei sich an gegenüberliegende Seiten eines Aufnahmeabschnitts (2) anschließende Kanäle (15, 15a) zur Aufnahme jeweils einer Antriebswelle (17), wobei die Kanäle (15, 15a) an ihren dem Aufnahmeabschnitt (2) gegenüberliegenden Enden jeweils einen Anschlussflansch (3, 3a) aufweisen.

## Claims

1. Holding device for an adjustment drive of a motor vehicle seat, with at least one connecting flange, which is formed from a plastics material, for fastening the holding device to the motor vehicle seat, wherein a fastening clip (4) having at least one holding tab (5), which is elastically adjustable between a locking position and an installation position, is integrally formed on the connecting flange (3, 3a), **characterized in that** a blocking element (6) is integrally formed on the connecting flange (3, 3a) so as to be releasable in an inoperative position, wherein the blocking element (6) is shiftable manually through an opening (7) in the connecting flange (3, 3a) from the inoperative position into a blocking position in which the blocking element (6) blocks an elastic shifting of the holding tab (5) into the installation position.

2. Holding device according to Claim 1, **characterized in that** the holding tab (5) has, in the region of the free end (9) thereof that is opposite the connecting flange (3, 3a), a holding surface (8) which runs on the outer side.

3. Holding device according to Claim 2, **characterized in that** the holding tab (5) has a shape tapering from the holding surface (8) to the free end (9).

4. Holding device according to one of the preceding claims, **characterized in that** the fastening clip (4) has at least two, preferably at least three, particularly preferably four holding tabs (5) which are arranged offset by approximately 90° and together have a circular inner and/or outer cross section.

5. Holding device according to one of the preceding claims, **characterized in that** the holding tabs (5) are arranged adjacent to the opening (7) in a manner running coaxially with respect thereto.

6. Holding device according to one of the preceding claims, **characterized in that** the blocking element is formed by a blocking pin (6) with a pin body (10) and a pin head (11), wherein, in the inoperative position, the pin body (10) is connected by the free end thereof which is opposite the pin head (11) via a manually destructible plastics web (12), which runs coaxially with respect to the opening, to the connecting flange (3, 3a), wherein the cross section of the pin body (10) is designed in such a manner that the latter is displaceable through the opening (7).

7. Holding device according to Claim 6, **characterized in that** the pin body (10) has a cross-sectional enlargement (13) in the region of the pin head (11).

8. Holding device according to one of the preceding claims, **characterized in that** the connecting flange (3, 3a) has positioning pins (14) arranged adjacent to the fastening clip (4).

9. Holding device according to one of the preceding claims, **characterized by** a receiving portion (2) for the mounting of a drive unit and/or at least one channel (15, 15a) for the mounting of a drive shaft (17).

10. Holding device according to one of the preceding claims, **characterized in that** the receiving portion (2), the connecting flange (3, 3a), the fastening clip (4) and/or the blocking pin (6) are formed from a glass-fibre-reinforced and/or fibre-reinforced, in particular carbon-fibre-reinforced plastic.

11. Holding device according to one of the preceding claims, **characterized by** two channels (15, 15a) which are connected on opposite sides of a receiving portion (2) and are intended for receiving one drive shaft (17) each, wherein the channels (15, 15a) each have a connecting flange (3, 3a) at the ends thereof opposite the receiving portion (2).

## Revendications

1. Dispositif de blocage pour un entraînement de réglage d'un siège de véhicule automobile, comprenant au moins une bride de raccordement formée en matière plastique pour la fixation du dispositif de blocage au siège de véhicule automobile, un clip de fixation (4) comprenant au moins une patte de blocage (5) déplaçable élastiquement entre une position de verrouillage et une position de montage étant formé sur la bride de raccordement (3, 3a), **caractérisé en ce qu'**un élément d'arrêt (6) est formé de manière détachable dans une position de repos sur la bride de raccordement (3, 3a), l'élément d'arrêt (6) pouvant être déplacé manuellement à travers une ouverture (7) dans la bride raccordement (3, 3a) depuis la position de repos dans une position d'arrêt dans laquelle l'élément d'arrêt (6) bloque un déplacement élastique de la patte de blocage (5) dans la position de montage.

2. Dispositif de blocage selon la revendication 1, **caractérisé en ce que** la patte de blocage (5) présente, dans la région de son extrémité libre (9) opposée à la bride de raccordement (3, 3a), une surface de blocage (8) s'étendant du côté extérieur.

3. Dispositif de blocage selon la revendication 2, **caractérisé en ce que** la patte de blocage (5) présente une forme se rétrécissant depuis la surface de blocage (8) jusqu'à l'extrémité libre (9).

4. Dispositif de blocage selon l'une quelconque des revendications précédentes, **caractérisé en ce que** le clip de fixation (4) présente au moins deux, de préférence au moins trois, particulièrement de préférence quatre pattes de blocage (5) décalées d'environ 90°, qui présentent ensemble une section transversale intérieure et/ou extérieure de forme circulaire.

5. Dispositif de blocage selon l'une quelconque des revendications précédentes, **caractérisé en ce que** les pattes de blocage (5) sont disposées de manière à s'étendre coaxialement par rapport à l'ouverture (7) en position adjacente à celle-ci.

6. Dispositif de blocage selon l'une quelconque des revendications précédentes, **caractérisé en ce que** l'élément d'arrêt est formé par une goupille d'arrêt (6) avec un corps de goupille (10) et une tête de goupille (11), le corps de goupille (10) dans la position de repos étant connecté à la bride de raccordement (3, 3a) par son extrémité libre opposée à la tête de goupille (11), par le biais d'une nervure en plastique (12) pouvant être détruite manuellement, s'étendant coaxialement par rapport à l'ouverture, la section transversale du corps de goupille (10) étant réalisée de telle sorte que celle-ci puisse être déplacée à travers l'ouverture (7).

7. Dispositif de blocage selon la revendication 6, **caractérisé en ce que** le corps de goupille (10) présente, dans la région de la tête de goupille (11), un élargissement de section transversale (13).

8. Dispositif de blocage selon l'une quelconque des revendications précédentes, **caractérisé en ce que** la bride de raccordement (3, 3a) présente des goupilles de positionnement (14) disposées en position adjacente au clip de fixation (4).

9. Dispositif de blocage selon l'une quelconque des revendications précédentes, **caractérisé par** une portion de réception (2) pour le support d'une unité d'entraînement et/ou au moins un canal (15, 15a) pour supporter un arbre d'entraînement (17).

10. Dispositif de blocage selon l'une quelconque des revendications précédentes, **caractérisé en ce que** la portion de réception (2), la bride de raccordement (3, 3a), le clip de fixation (4) et/ou la goupille d'arrêt (6) sont formés d'un plastique renforcé par des fibres de verre et/ou renforcé par des fibres, en particulier renforcé par des fibres de carbone.

11. Dispositif de blocage selon l'une quelconque des revendications précédentes, **caractérisé par** deux canaux (15, 15a) se raccordant au niveau de côtés opposés d'une portion de réception (2) pour recevoir à chaque fois un arbre d'entraînement (17), les canaux (15, 15a) présentant, au niveau de leurs extrémités opposées à la portion de réception (2), à chaque fois une bride de raccordement (3, 3a).
